# EUROPÄISCHE PATENTANMELDUNG

(11) **EP 2 578 347 A2**
(43) Veröffentlichungstag der Anmeldung: **10.04.2013**
(21) Anmeldenummer: 12186585.1
(22) Anmeldetag: 28.09.2012
(51) Int. Cl.: B23K 20/12, B23K 37/02, B23K 37/04, B23K 37/053

(54) **Fügevorrichtung zum Verbinden von Strukturbauteilen eines Luftfahrzeuges**

(30) Priorität: 06.10.2011 DE 102011114922; 06.10.2011 US 201161543880 P
(71) Anmelder: Airbus Operations GmbH, 21129 Hamburg (DE)
(72) Erfinder: Pacchione, Marco, 22605 Hamburg (DE); Pezzi, Matteo, 48026 Russi (RA) (IT); Richter-Trummer, Valentin, 4425-407 Ermesinde (PT)
(74) Vertreter: Maiwald Patentanwalts GmbH

(57) **Zusammenfassung**

Die Erfindung betrifft eine Fügevorrichtung zum Verbinden von Strukturbauteilen (1a-1d) eines Luftfahrzeugs, umfassend Positioniermittel zum Halten der miteinander zu verbindenden Strukturbauteile (1a-1d) in einer definierten Solllage, in welcher die Strukturbauteile (1a-1d) mit einer über Führungsmittel relativ zu den Strukturbauteilen (1a-1d) bewegbaren Fügeeinrichtung (6) fest miteinander verbindbar sind,
wobei die Positioniermittel eine außen im Randbereich auf die zu verbindenden Strukturbauteile (1a-1d) entlang der Fügekanten (5) lösbar angebrachte formgebende Rahmenkonstruktion (2) umfassen, welche als Führungsmittel für die hierauf verfahrbar angebrachte Fügeeinrichtung (6) dient.

## Beschreibung

### Gebiet der Erfindung

Die Erfindung betrifft eine Fügevorrichtung zum Verbinden von Strukturbauteilen eines Luftfahrzeuges, umfassend Positioniermittel zum Halten der miteinander zu verbindenden Strukturbauteile in einer definierten Solllage, in welcher die Strukturbauteile mit einer über Führungsmittel relativ zu den Strukturbauteilen bewegbaren Fügevorrichtung fest miteinander verbindbar sind.

Das Einsatzgebiet der Erfindung erstreckt sich auf den Flugzeugbau. Zur Montage großvolumiger Rümpfe von Verkehrsflugzeugen werden einzelne Strukturbauteile, wie Seitenteile, Bodenteile und Dachteile über Längsnähte zu einer Rumpfsektion verbunden und einzelne hohlzylinderartige Rumpfsektionen werden anschließend über Quernähte miteinander zum Flugzeugrumpf zusammengefügt. Daneben ist es auch denkbar, dass einzelne Rumpfsektionen zweistückig oder einstückig ausgebildet sind. Jedes Strukturbauteil besteht aus einer aus längsverlaufenden Stringern und quer hierzu verlaufenden Spanten bestehenden Unterkonstruktion, auf welcher die meist aus einem Leichtmetallblech bestehende Außenhaut des Flugzeugrumpfs aufgebracht ist. Die einzelnen Strukturbauteile werden gewöhnlich durch Nieten miteinander zusammengefügt.

Aus der DE 198 34 702 A1 geht eine Fügevorrichtung zum Verbinden von Strukturbauteilen hervor, bei welcher die Strukturbauteile mit einer Nietmaschine als Fügeeinrichtung miteinander verbunden werden. Die Fügevorrichtung ist speziell für die Verbindung von Quernähten zwischen zwei Rumpfsektionen vorgesehen. Die Nietmaschine weist als äußeres Teil eine ringförmig um die Rumpfsektion angeordnete und in Längsrichtung verschiebbare Führung auf. Innerhalb der Rumpfsektion ist ein innerer Teil der Nietmaschine vorgesehen, der ein in Längsrichtung verfahrbares Haltegestell aufweist, an dem ein mehrachsig gesteuerter Nietroboter angeordnet ist, wobei durch Zusammenwirken von Haltegestell und Nietroboter rechnergestützt jede Arbeitsposition innerhalb des Strukturbauteils angesteuert werden kann.

Diese Fügevorrichtung des Standes der Technik ist auf die Verwendung von Nieten als Verbindungsmittel ausgerichtet und erfordert in fertigungstechnisch aufwendiger Weise sowohl innerhalb des Strukturbauteils als auch außerhalb des Strukturbauteils exakt zu positionierende Vorrichtungsteile.

### Kurzbeschreibung der Erfindung

Es ist die Aufgabe der vorliegenden Erfindung eine Fügevorrichtung zum Verbinden von Strukturbauteilen eines Luftfahrzeugs zu schaffen, welche mit einem einfachen Aufbau die zu verbindenden Strukturbauteile sicher positioniert und für alternative Fügeverfahren geeignet ist.

Die Aufgabe wird ausgehend von einer Fügevorrichtung gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die Positioniermittel eine außen im Randbereich auf die zu verbindenden Strukturbauteile entlang der Fügekanten lösbar angebrachte formgebende Rahmenkonstruktion umfassen, welche als Führungsmittel für die hierauf verfahrbar angebrachte Fügeeinrichtung dient.

Der Vorteil der erfindungsgemäßen Lösung liegt insbesondere daran, dass die Positioniermittel für die Strukturbauteile in funktionsintegrierter Weise gleichzeitig auch die Führungsmittel für die Fügeeinrichtung bilden. Durch die erfindungsgegenständliche platzsparend entlang der Fügekanten ansetzende Rahmenkonstruktion, die gezielt in dem Bereich angeordnet ist, in welchem auch die Verbindung der benachbarten Strukturbauteile erfolgt, lässt sich eine sehr präzise Ausrichtung der miteinander zu verbindenden Strukturbauteile erzielen. Manuelle Lagekorrekturen, die häufig beim Nieten durchzuführen sind, können entfallen. Die sehr präzise Positionierung der beiden miteinander zu verbindenden Strukturbauteile bietet die Voraussetzung dafür, alternative Fügeverfahren, wie beispielsweise Reibrührschweißen für die feste Verbindung der Strukturbauteile zu nutzen. Voraussetzung hierfür ist, dass die Außenhaut der Strukturbauteile aus einem Leichtmetall - vorzugsweise Aluminium - besteht.

Beim Reibrührschweißen wird die Reibenergie durch die Rotation eines verschleißfrei rotierenden Werkzeugs erzeugt. Das rotierende Werkzeug wird mit hoher Kraft in den Fügespalt zwischen den miteinander zu verbindenden Strukturbauteilen gedrückt, und mindestens eine Werkzeugschulter kommt auf der Bauteiloberfläche zur Anlage. Durch die Reibung zwischen der mindestens einen Werkzeugschulter und den Fügepartnern erwärmt sich der Werkstoff unter der Schulter bis kurz unter den Schmelzpunkt. Dieser Temperaturanstieg hat einen Festigkeitsabfall zur Folge, wodurch der Werkstoff plastifiziert wird und eine Vermischung der Fügezonen möglich wird. Mit dem Einsetzen einer Vorschubbewegung entlang des Fügespalts wird das rotierende Werkzeug mit hoher Anpresskraft fortbewegt. Der durch die Vorschubbewegung entstehende Druckgradient zwischen Vorder- und Rückseite des Werkzeugs und dessen Rotationsbewegung bewirken den Transport von plastifiziertem Werkstoff um das Werkzeug herum, der sich dort vermischt und die Schweißnaht bildet.

Die als eine derartige Schweißvorrichtung ausgebildete Fügeeinrichtung ist vorzugsweise mit einem an sich bekannten sogenannten Bobbin-Tool als Werkzeug zum Reibrührschweißen ausgestattet. Das Bobbin-Tool besitzt zwei einander gegenüberliegende und auf beide Werkstückoberflächen gleichzeitig einwirkende Werkzeugschultern. Hierdurch kann ein Gegenhalter entfallen, welcher ansonsten an der der Werkzeugschulter gegenüberliegenden Seite des Werkstücks vorzusehen ist. Durch ein solches Bobbin-Tool ist das Schweißen der miteinander zu verbindenden Strukturbauteile unter Nutzung einer Fügeeinrichtung durchführbar, welche nur an einer Werkstücksseite, hier vorzugsweise der Außenseite des Strukturbauteils, angeordnet ist. Dementsprechend sollte die erfindungsgemäße Rahmenkonstruktion ebenfalls auf die Außenseite der Strukturbauteile einwirken, um diese für den Fügeprozess relativ zueinander zu positionieren.

Gemäß einer bevorzugten Ausführungsform ist die erfindungsgemäße Rahmenkonstruktion aus längs der Strukturbauteile verlaufende im Wesentlich gerade Längsträger sowie quer hierzu verlaufende und an die Form des Rumpfquerschnitts angepasste Querträger aufgebaut. Die Längsträger sind ebenfalls der Form des Rumpfes angepasst und im Wesentlichen gerade, also nicht oder nur leicht gewölbt ausgebildet. Da die Längsträger in der Praxis auch mehr als 10 Meter lang sein können, wird vorgeschlagen, diese erforderlichenfalls in kleinere Abschnitte zu teilen, um die Handhabung und Positionierung zu erleichtern.

Vorzugsweise weisen die Längsträger und die Querträger einen flachen oder L-förmigen Querschnitt auf. Im Falle eines L-förmigen Querträger wird vorgeschlagen, diese Vorzugsweise derart bezüglich einander zugeordneten Fügekanten der Strukturbauteile zu positionieren, dass sich im montierten Zustand gemeinsam ein U-förmiger Querschnitt ergibt. Dieser U-förmige Querschnitt gewährleistet zum einen eine hohe Stabilität der Rahmenkonstruktion und kann zum anderen als Führung für eine hierin platzierbare Fügeeinrichtung dienen, um diese in Vorschubrichtung exakt relativ zu den einander zugeordneten Fügekanten zu führen. Es ist jedoch auch denkbar, den Längsträger und den Querträger mit anderen Querschnittsformen zu gestalten, sofern diese sowohl hinsichtlich einer hinreichenden Stabilität der Rahmenkonstruktion als auch hinsichtlich einer geeigneten Basis für die hiermit zusammenwirkende Fügeeinrichtung geeignet sind.

Zur Erhöhung der Stabilität der beiden benachbart zueinander entlang der Fügekanten angeordneten Längsträger oder Querträger wird vorgeschlagen, diese über mindestens einen Querbügel oder dergleichen miteinander zu fixieren. Hierdurch werden Querkräfte von bis zu 10.000 Newton kompensiert, welche während des Fügevorgangs entstehen können, so dass vermieden wird, dass sich der Fügespalt zwischen den beiden zugeordneten Fügekanten aufgrund dieser hohen fertigungstechnisch bedingten Querkräfte erweitert. Somit bilden die Querbügel, welche in äquidistanten Abständen entlang von Längsträgern und Querträgern angeordnet werden können, eine einfache und wirkungsvolle Stabilitätserhöhung der Rahmenkonstruktion während des Fügevorgangs, also vorzugsweise dem Reibrührschweißen mittels Bobbin-Tool.

Zur Montage der Längsträger und Querträger an den Strukturbauteilen werden diese über diverse Schraubverbindungen lösbar mit dem zugeordneten Strukturbauteil verbunden. Die hierfür in die Strukturbauteile eingebrachten Durchbrüche können nach Entfernung der Rahmenkonstruktion für Nietverbindungen oder dergleichen genutzt werden. Das großflächige Strukturbauteil wird durch die erfindungsgemäße Rahmenkonstruktion in die Solllage gebracht, wobei die Rahmenkonstruktion dafür sorgt, dass äußerst geringe Toleranzen bestehen. Die zunächst beabstandet zueinander angebrachten Schraubverbindungen zwischen Längsträger oder Querträger und dem Strukturbauteil dienen als temporäre Fixiermittel, um das Strukturbauteil in die Solllage zu bringen, also an die Form der Rahmenkonstruktion anzupassen.

Zusätzlich oder alternativ kann gemäß einer weiteren die Erfindung verbessernden Maßnahme eine Fixierung über Vakuummittel erfolgen. Hierzu können Saugnäpfe am Längsträger und Querträger angebracht werden, welche die Strukturbauteile möglichst entlang der gesamten Länge von Längsträger bzw. Querträger fixieren. Durch diese Vakuumsaugmittel kann eine Verbindungskraft zwischen der Rahmenkonstruktion und den miteinander zu verbindenden Strukturbauteilen erzeugt werden, welche hoch genug ist, um das Verschweißen in der Solllage der miteinander zu verbindenden Strukturbauteile durchzuführen.

Gemäß einer anderen die Erfindung verbessernden Maßnahme wird vorgeschlagen, dass die Strukturbauteile in montiertem Zustand die Rahmenkonstruktion randseitig etwas überlappen oder mit Aufmaß gefertigt sind und mit einer hierauf verfahrbar angebrachten Trenneinrichtung vor dem Fügen auf Fertigmaß schneidbar sind. Dies bietet den Vorteil, dass die Strukturbauteile hinsichtlich ihrer Abmessungen zunächst mit höheren Toleranzen größer gefertigt werden können, wobei der tatsächliche Zuschnitt auf Fertigmaß erst in montiertem Zustand an der Rahmenkonstruktion erfolgt. Hierdurch lässt sich ein sehr präziser Zuschnitt der Strukturbauteile erzielen.

Gemäß einer anderen die Erfindung verbessernden Maßnahme wird vorgeschlagen, dass die Trenneinrichtung zum Zuschnitt der Strukturbauteile als ein modularer Bestandteil der Fügeeinrichtung ausgebildet ist. Beide Einrichtungen können insoweit mit einer einzigen Maschine realisiert werden, welche sich entlang der durch Längsträger und Querträger gebildeten Führung bewegen lässt. Alternativ hierzu ist es jedoch auch möglich, dass die Trenneinrichtung und die Fügeeinrichtung als separate Maschinen ausgebildet sind, welche je nach Arbeitsaufgabe austauschbar in die durch Längsträger und Querträger gebildeten Führungen einzusetzen sind.

### Kurze Beschreibung der Zeichnung

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematische, perspektivische Ansicht von mit einer Rahmenkonstruktion versehenen Strukturbauteilen eines Flugzeugrumpfs,
- Figur 2: eine schematische Seitenansicht eines auf einem Strukturbauteil fixierten Längsträger, und
- Figur 3: eine schematische Querschnittsdarstellung durch eine auf benachbarte Strukturteile aufgebrachte Rahmenkonstruktion.

### Detailbeschreibung der Zeichnung

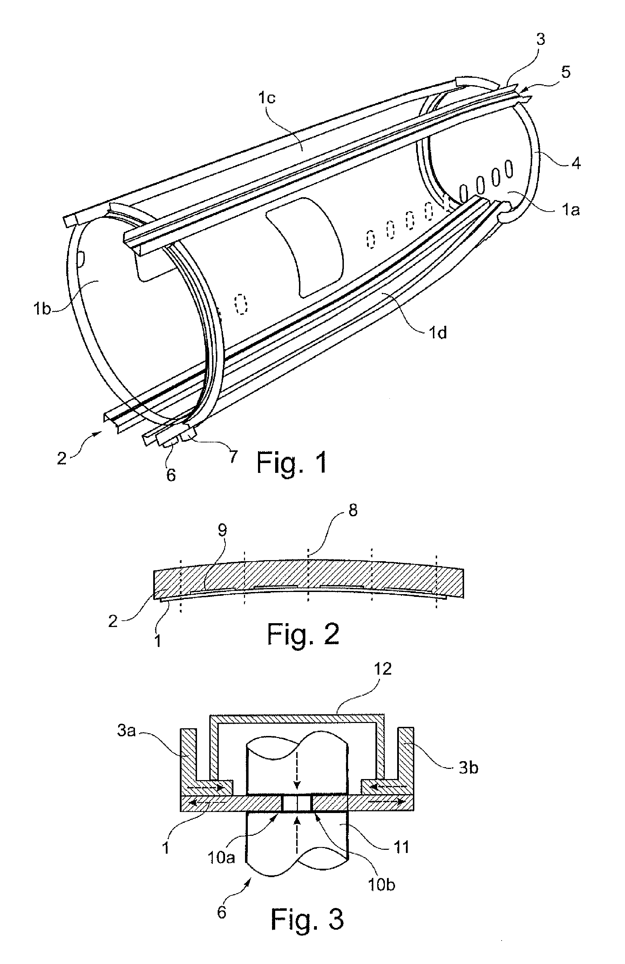

Gemäß Figur 1 besteht eine Rumpfsektion eines Flugzeuges aus einem ersten Strukturbauteil 1a als erstes Seitenteil, einem zweiten Strukturbauteil 1b als zweites Seitenteil, einem dritten Strukturbauteil 1c als Deckenteil und einem vierten Strukturbauteil 1d als Bodenteil. Alle Strukturbauteile 1a bis 1d sind in diesem Ausführungsbeispiel als gewölbte Rumpfschalen ausgebildet.

Die Strukturbauteile 1a bis 1d sind in der definierten Solllage über Positioniermittel gehalten, welche eine Rahmenkonstruktion 2 umfassen. Die Rahmenkonstruktion 2 besteht aus längs der Strukturbauteile 1a bis 1d verlaufende, im Wesentlichen gerade, also nur leicht gebogene Längsträger 3 und quer hierzu verlaufende und an die Form des Rumpfquerschnitts angepasste Querträger 4 (exemplarisch). Die Längsträger 3 sowie die Querträger 4 sind außen im Randbereich der Strukturbauteile 1a bis 1d entlang von exemplarisch hier für den Bereich der Längsträger 3 vorhandenen Fügekanten 5 lösbar angebracht, um die Strukturbauteile 1a bis 1d in der definierten Solllage zum anschließenden Zusammenfügen zu halten.

Daneben dient die aus Längsträgern 3 und Querträgern 4 bestehende Rahmenkonstruktion 2 auch als Führungsmittel für eine hierauf verfahrbar angebrachte Fügeeinrichtung 6. Die Strukturbauteile 1a bis 1d überlappen im montierten Zustand die Rahmenkonstruktion 2 randseitig. Eine auf der Rahmenkonstruktion 2 verfahrbar angebrachte Trenneinrichtung 7 schneidet die Strukturbauteile 1a bis 1d vor dem Fügen auf Fertigmaß, so dass anschließend eine maßhaltige Verbindung der Strukturbauteile 1a bis 1d über die Fügeeinrichtung 6 hergestellt werden kann. In diesem Ausführungsbeispiel ist die Trenneinrichtung 7 ein modularer Bestandteil der Fügeeinrichtung 6.

Gemäß Figur 2 wird der hier dargestellte exemplarische Längsträger 3 der Rahmenkonstruktion über beabstandet zueinander angeordnete Schraubverbindungen 8 an dem Strukturbauteil 1 lösbar fixiert. Hierdurch wird das Strukturbauteil 1 in die durch den Längsträger 2 vorgegebene Solllage gebracht. Zusätzlich ist das Strukturbauteil 1 über Vakuumsaugmittel 9 am Längsträger 2 gehalten, um eine höhere Befestigungskraft aufzubringen.

Gemäß der schematischen Darstellung von Figur 3 weist der hier exemplarisch dargestellte Längsträger 3 einen L-förmigen Querschnitt auf. Benachbarte Längsträger 3 und 3a bilden über einander zugeordnete Fügekanten 10a bzw. 10b im montierten Zustand einen U-förmigen Querschnitt. Hierin wird die Fügeeinrichtung 6 in Vorschubrichtung geführt. Die Fügeeinrichtung 6 ist in diesem Ausführungsbeispiel als eine Schweißvorrichtung ausgebildet. Die Schweißvorrichtung umfasst ein Bobbin-Tool 11 als Werkzeug. Während des Reibrührschweißens mit dem Bobbin-Tool 11 wirken auf die Fügekanten 10a und 10b auch Querkräfte, welche mittels eines Querbügels 12 kompensiert werden.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfassen. So ist es beispielsweise auch möglich, dass der zur Aufnahme der Querkräfte dienende Bügel Bestandteil der Fügeeinrichtung 6 und/oder Trenneinrichtung 7 ist. Ferner können neben einer Fügeeinrichtung 6 oder Trenneinrichtung 7 auch beispielsweise eine ähnlich verfahrbare Poliereinrichtung, Beschichtungseinrichtung oder Sensoreinrichtung im Zusammenhang mit den erfindungsgemäßen Führungsmitteln genutzt werden.

Ergänzend ist darauf hinzuweisen, dass "umfassen" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Strukturbauteil
- 2: Rahmenkonstruktion
- 3: Längsträger
- 4: Querträger
- 5: Fügekante
- 6: Fügeeinrichtung
- 7: Trenneinrichtung
- 8: Schraubverbindung
- 9: Vakuumsaugmittel
- 10: Fügekante
- 11: Bobbin-Tool
- 12: Querbügel

## Patentansprüche

1. Fügevorrichtung zum Verbinden von Strukturbauteilen (1a-1d) eines Luftfahrzeugs, umfassend Positioniermittel zum Halten der miteinander zu verbindenden Strukturbauteile (1a-1d) in einer definierten Solllage, in welcher die Strukturbauteile (1a-1d) mit einer über Führungsmittel relativ zu den Strukturbauteilen (1a-1d) bewegbaren Fügeeinrichtung (6) fest miteinander verbindbar sind,
**dadurch gekennzeichnet, dass** die Positioniermittel eine außen im Randbereich auf die zu verbindenden Strukturbauteile (1a-1d) entlang der Fügekanten (5) lösbar angebrachte formgebende Rahmenkonstruktion (2) umfassen, welche als Führungsmittel für die hierauf verfahrbar angebrachte Fügeeinrichtung (6) dient.

2. Fügevorrichtung nach Anspruch 1,
**dadurch gekennzeichnet, dass** die Fügeeinrichtung (6) als eine Schweißvorrichtung ausgebildet ist.

3. Fügevorrichtung nach Anspruch 2,
**dadurch gekennzeichnet, dass** die als Schweißvorrichtung ausgebildete Fügeeinrichtung (6) mit einem Bobbin-Tool (11) als Werkzeug zum Reibrührschweißen ausgestattet ist.

4. Fügevorrichtung nach Anspruch 1,
**dadurch gekennzeichnet, dass** die Rahmenkonstruktion (2) aus längs der Strukturbauteile (1a-1d) verlaufende im wesentlichen gerade Längsträger (3) sowie quer hierzu verlaufende und an die Form des Rumpfquerschnitts angepasste Querträger (4) besteht.

5. Fügevorrichtung nach Anspruch 4,
**dadurch gekennzeichnet, dass** die Längsträger (3) und die Querträger (4) einen flachen oder L-förmigen Querschnitt aufweisen.

6. Fügevorrichtung nach Anspruch 5,
**dadurch gekennzeichnet, dass** die je L-förmigen Längsträger (3a, 3b) und Querträger (4) zur Verbindung benachbarter Strukturbauteile (1a-1d) über einander zugeordnete Fügekanten (10a, 10b) im montierten Zustand gemeinsam einen U-förmigen Querschnitt ergeben, um hierin die Fügeeinrichtung (6) in Vorschubrichtung zu führen.

7. Fügevorrichtung nach mindestens einem der Ansprüche 4 bis 6,
**dadurch gekennzeichnet, dass** die zueinander benachbart angeordneten Längsträger (3) oder Querträger (4) über mindestens einen Querbügel (12) miteinander verbunden sind.

8. Fügevorrichtung nach Anspruch 4,
**dadurch gekennzeichnet, dass** die Längsträger (3) und/oder die Querträger (4) über beabstandet zueinander angeordnete Schraubverbindungen (8) lösbar mit dem zugeordneten Strukturbauteil (1a-1d) verbunden sind.

9. Fügevorrichtung nach Anspruch 4,
**dadurch gekennzeichnet, dass** die Längsträger (3) und die Querträger (4) über hieran befestigte Vakuumsaugmittel (9) lösbar mit dem zugeordneten Strukturbauteil (1a-1d) verbunden sind.

10. Fügevorrichtung nach Anspruch 1,
**dadurch gekennzeichnet, dass** die Strukturbauteile (1a-1d) im montierten Zustand die Rahmenkonstruktion (2) randseitig überlappen oder mit Aufmaß gefertigt sind und mit einer hierauf verfahrbar angebrachten Trenneinrichtung (7) vor dem Fügen auf Fertigmaß schneidbar sind.

11. Fügevorrichtung nach Anspruch 10,
**dadurch gekennzeichnet, dass** die Trenneinrichtung (7) ein modularer Bestandteil der Fügeeinrichtung (6) ist.

12. Fügevorrichtung nach einem der vorstehender Ansprüche,
**dadurch gekennzeichnet, dass** das Strukturbauteil (1a - 1d) als eine hohlzylinderartige Rumpfsektion oder eine gewölbte Rumpfschale ausgebildet ist.
